# NOUVEAU FASCICULE DE BREVET EUROPEEN

(11) **EP 2 873 810 B2**
(45) Date de publication et mention de la décision concernant l'opposition: **01.07.2020**
(45) Mention de la délivrance du brevet: 19.07.2017
(21) Numéro de dépôt: 13193258.4
(22) Date de dépôt: 18.11.2013
(51) Int. Cl.: F01D 9/06, F01D 25/18, F01D 25/16

(54) **Couvercle annulaire de délimitation d'enceinte de lubrification de turbomachine**
Ringförmiger Deckel zur Begrenzung der Lagerkammer eines Turbotriebwerks
Annular cover for defining a turbomachine lubrication chamber

(43) Date de publication de la demande: 20.05.2015
(73) Titulaire: Safran Aero Boosters SA, 4041 Herstal (BE)
(72) Inventeur: Grelin, Hervé, 89340 Villeblevin (FR); Honore, Didier, 4000 Liège (BE)
(74) Mandataire: Lecomte & Partners

(56) Documents cités:
- EP-A1- 1 653 052
- EP-A1- 2 071 141
- EP-A2- 1 662 636
- US-A- 5 114 446
- US-A- 6 030 176
- US-B1- 6 325 546

## Description

### Domaine technique

L'invention a trait à un couvercle annulaire de délimitation d'une enceinte de lubrification. Plus précisément, l'invention a trait à un couvercle annulaire de délimitation d'une enceinte de lubrification de compresseur de turbomachine axiale. L'invention a également trait à une turbomachine présentant une enceinte annulaire de lubrification qui est délimitée en amont par un couvercle annulaire.

### Technique antérieure

La lubrification des paliers d'un arbre de transmission longitudinal d'une turbomachine axiale s'effectue généralement au moyen d'un brouillard d'huile. Ce brouillard est contenu dans une enceinte de lubrification étanche, l'enceinte étant avantageusement maintenue en dépression de sorte à empêcher les fuites d'huile vers l'extérieur. L'enceinte peut être délimitée en amont par un couvercle annulaire qui présente des joints annulaires. En particulier, le couvercle annulaire peut présenter deux joints annulaires amont disposés en série autour d'un arbre de sorte à former deux barrières d'étanchéité consécutive réduisant au maximum les pertes.

Le couvercle annulaire présente une forme annulaire avec une ouverture centrale amont, et différents canaux de pressurisation répartis autour de l'ouverture. Les canaux peuvent être des canaux communiquant avec un étage de compresseur pour pressuriser l'enceinte directement.

Suivant d'autres configurations, les canaux peuvent être des canaux de récupération d'huile par aspiration. Ils s'étendent d'amont en aval pour drainer l'huile dans un circuit de lubrification. A cet effet, la turbomachine peut comprendre une aspiration communiquant avec les canaux. Les canaux débouchent généralement en aval du jeu de joints annulaires, certains canaux peuvent également déboucher entre les joints annulaires de sorte à collecter l'huile qui aurait réussi à franchir le joint directement en contact de l'enceinte annulaire de lubrification.

Le document FR 2 925 131 B1 divulgue un flasque d'étanchéité d'enceinte de lubrification de palier de turbomachine axiale. Le flasque est fixé en aval au carter intermédiaire de la turbomachine et présente deux joints annulaires en amont. Le flasque comprend en outre des cheminées disposées entre les joints et qui s'étendent radialement. Les cheminées sont connectées à des tubes de pressurisation de sorte à pressuriser l'enceinte de lubrification au travers du joint disposé en aval. Cette configuration permet de pressuriser une enceinte et de réduire les fuites. Or, le flasque ainsi formé présente une rigidité et/ou une résistance mécanique réduite. Etant disposé dans une turbomachine, il est soumis à des vibrations. Sous l'effet de son inertie, son extrémité libre amont peut osciller et endommager les joints qui y sont montés.

Le document EP 1 653 052 A1 divulgue un couvercle annulaire d'enceinte de lubrification de palier de turbomachine axiale, conforme au préambule de la revendication 1. Le couvercle forme une enceinte annulaire destinée à permettre le passage d'air de pressurisation et de refroidissement d'un joint assurant l'étanchéité entre le couvercle en question est un support.

Le document EP 1 662 636 A2 divulgue un couvercle annulaire d'enceinte de lubrification de palier de turbomachine axiale, également conforme au préambule de la revendication 1. Ce couvercle n'est pas détaillé dans ce document. Il semble former une enceinte annulaire, similairement au document précédent. Cette enceinte semble être reliée à des tuyaux en vue d'assurer une pressurisation au niveau d'une étanchéité tournante avec l'arbre de la machine.

### Résumé de l'invention

### Problème technique

L'invention a pour objectif de résoudre au moins un des problèmes posés par l'art antérieur.

### Solution technique

L'invention a trait à un couvercle annulaire d'enceinte de lubrification de palier tournant de turbomachine, le couvercle comprenant une paroi généralement circulaire et évasée avec, à une extrémité, un orifice destiné à recevoir un arbre de transmission et à l'autre extrémité une surface de montage du couvercle ; un ou plusieurs conduit(s) s'étendant le long de la paroi jusqu'à la surface de montage, remarquable en ce que le ou les conduit(s) est un /sont des conduit(s) d'aspiration d'huile en communication avec l'intérieur de la paroi.

Selon une alternative de l'invention, le ou les conduits sont intégralement formés avec la paroi, préférentiellement le ou les conduits sont venus de matière avec la paroi.

Selon une alternative de l'invention, le ou les conduits sont des conduits d'huile présentant une section de passage minimale comprise entre 0,3 cm2 et 15 cm2, préférentiellement comprise entre 0,6 cm2 et 4 cm2.

Selon une alternative de l'invention, la paroi présente un épaississement le long du ou des conduits, préférentiellement chaque conduit est majoritairement disposé à l'extérieur de la paroi.

Selon une alternative de l'invention, chaque conduit s'étend généralement parallèlement à la paroi, préférentiellement chaque conduit s'étend sur la majorité axiale du couvercle, plus préférentiellement la paroi comprend un profil général de révolution, chaque conduit s'étendant essentiellement sur la totalité radiale du profil de révolution de la paroi.

Selon une alternative de l'invention, la largeur de chaque conduit augmente et/ou la hauteur de chaque conduit diminue, dans le sens de la diminution de diamètre de la paroi évasée.

La hauteur du conduit est mesurée perpendiculairement à la paroi, la largeur du conduit est mesurée perpendiculairement à son allongement et à sa hauteur.

Selon une alternative de l'invention, chaque conduit comprend une entrée orientée radialement et disposée du côté de moindre diamètre de la paroi évasée, et/ou une sortie cylindrique orientée axialement et disposée du côté du diamètre maximal de la paroi évasée.

Selon une alternative de l'invention, la paroi et le ou les conduits sont réalisés en un matériau composite, préférentiellement en un composite avec des fibres de carbone et une matrice thermoplastique telle que du polyétheréthercétone, du polyétherimide, ou du polyamide.

Selon une alternative de l'invention, que la paroi comprend une alternance de portions tronconiques et de portions tubulaires, et éventuellement une portion s'étendant radialement, lesdites portions étant agencées de manière à former un ensemble généralement évasé.

Selon une alternative de l'invention, le couvercle comprend une bride annulaire de fixation s'étendant radialement et qui comprend la surface de montage, chaque conduit traversant la bride annulaire de fixation.

Selon une alternative de l'invention, le couvercle comprend une portée tubulaire à son extrémité axiale du côté de moindre diamètre de la paroi évasée et/ou il comprend une surface cylindrique intérieure de réception d'un joint annulaire, la surface de réception étant délimitée axialement par un épaulement et par une gorge annulaire, préférentiellement le couvercle comprend un joint annulaire amont telle une couche annulaire de matériau abradable appliquée à l'intérieur de la portée tubulaire, et/ou un joint annulaire interne tel un jeu de nervures annulaires radiales, monté à l'intérieur de la surface de réception.

Selon une alternative de l'invention, le couvercle comprend deux joints annulaires destinés à coopérer avec au moins un rotor et disposés sur une même moitié axiale du couvercle, chaque conduit débouchant entre axialement les deux joints et étant en communication avec l'enceinte de lubrification au travers d'un des joints.

Selon une alternative de l'invention, le ou au moins un des conduits s'étend axialement et/ou radialement jusqu'à la surface de montage.

Selon un mode avantageux de l'invention, la bride annulaire de fixation comprend des moyens de fixation tels des orifices de fixation la traversant axialement.

Selon un mode avantageux de l'invention, les moyens de fixations sont disposés sur la surface de montage sur un cercle de diamètre inférieur au cercle sur lequel sont disposées les sorties des conduits.

Selon un mode avantageux de l'invention, le couvercle comprend une première ouverture et une deuxième ouverture axialement opposée à la première ouverture, la deuxième ouverture présente un diamètre supérieur au diamètre de la première ouverture, et est disposée du côté du plus grand diamètre de la paroi évasée.

Selon un mode avantageux de l'invention, sur la longueur chaque conduit comprend une portion s'étendant radialement, une portion généralement plate, un changement de section, une portion généralement quadrangulaire, une portion cylindrique.

Selon un mode avantageux de l'invention, chaque conduit présente une largeur qui se réduit depuis le côté de la paroi évasée de moindre diamètre vers le côté opposé.

Selon un mode avantageux de l'invention, chaque conduit comprend des cloisons latérales dont la hauteur augmente depuis le côté de la paroi évasée de moindre diamètre vers le côté opposé.

Selon un mode avantageux de l'invention, le ou les conduits sont totalement venus de matière avec la paroi.

L'invention a également trait à un couvercle annulaire d'enceinte de lubrification de palier tournant de turbomachine, le couvercle comprenant paroi annulaire généralement circulaire et évasée, apte à délimiter au moins une partie de l'enceinte de lubrification, au moins un conduit en communication avec l'intérieur de la paroi annulaire, remarquable en ce que le conduit et la paroi annulaire présentent une continuité de matière s'étendant généralement tout le long du conduit, préférentiellement le couvercle comprend une surface de montage du couvercle, le conduit s'étendant jusqu'à la surface de montage.

L'invention a également trait à une turbomachine comprenant un couvercle annulaire d'enceinte de lubrification de palier tournant, remarquable en ce que le couvercle d'enceinte est conforme à l'invention, préférentiellement la turbomachine comprend en outre au moins un compresseur, au moins une turbine, au moins un arbre de transmission reliant le compresseur à la turbine, un carter intermédiaire de soufflante, un palier tournant articulant l'arbre de transmission par rapport au carter intermédiaire, un carter d'enceinte de lubrification monté de manière étanche sur le carter intermédiaire de soufflante et formant autour de l'arbre de transmission une ouverture annulaire orientée axialement, le couvercle annulaire d'enceinte étant monté sur le carter d'enceinte de sorte à fermer l'ouverture annulaire axiale.

Selon un mode avantageux de l'invention, le palier est disposé à l'intérieur du couvercle annulaire, préférentiellement le palier est un palier auxiliaire d'un jeu de paliers auxiliaires, la turbomachine comprenant en outre un jeu de paliers principaux configurés pour supporter la majorité des efforts d'au moins un des arbres de transmission de la turbomachine.

Selon un mode avantageux de l'invention, le couvercle comprend plusieurs conduits répartis sur sa circonférence, éventuellement les conduits comprennent une répartition asymétrique, préférentiellement les conduits sont configurés pour être majoritairement disposés dans la moitié inférieure du couvercle dans l'état monté sur la turbomachine.

Selon un mode avantageux de l'invention, le couvercle et le carter d'enceinte sont réalisés en des matériaux différents.

Selon un mode avantageux de l'invention, le matériau du couvercle est plus léger que le matériau du carter d'enceinte, préférentiellement au moins deux fois plus léger.

Selon un mode avantageux de l'invention, le matériau du carter d'enceinte présente un module d'élasticité longitudinal en traction supérieur au matériau du couvercle, préférentiellement au moins 20% supérieur.

Le choix des matériaux du couvercle et du carter d'enceinte permet d'optimiser la résistance mécanique nécessaire pour supporter un palier tout en réduisant la masse de l'ensemble.

Selon un mode avantageux de l'invention, au moins un des arbres de transmission traverse le couvercle annulaire.

Selon un mode avantageux de l'invention, le rayon maximal de la paroi annulaire est supérieur, préférentiellement au moins deux fois supérieur à la longueur axiale de la paroi annulaire.

Il est évident pour l'homme du métier que l'ensemble des caractéristiques ci-dessus peuvent être combinées.

### Avantages apportés

Le conduit et la paroi présentent une continuité de matière, ce qui permet d'utiliser le conduit comme un renfort de la paroi puisque le conduit est fusionné avec la paroi. Le profil quadratique du conduit permet d'augmenter la rigidité de la paroi ainsi que sa résistante. Le conduit présente une hauteur qui augmente en direction de la zone de fixation du couvercle. Cela permet d'augmenter la rigidité apportée par le conduit au niveau du couvercle là où il est soumis à d'avantage d'efforts de flexion, et d'alléger les zones moins contraintes mécaniquement.

L'ensemble des conduits forme une ossature supportant la paroi qui s'étend comme une peau annulaire entre les conduits. Par ce biais, la paroi peut être amincie dans la mesure où l'essentiel de la fonction structurante est remplie par les conduits. En conséquence de quoi, l'inertie du couvercle est réduite, ce qui le rend moins sensible aux vibrations. Des joints annulaires disposés à l'opposé axialement du carter intermédiaire risquent moins de s'endommager lorsque la turbomachine vibre.

En raison de l'orientation axiale des conduits, la rigidité radiale du couvercle est améliorée. Son extrémité libre présentera des oscillations radiales moindres pour une excitation d'amplitude donnée. L'aspect aplati des conduits permet d'augmenter la rigidité en torsion suivant l'axe de révolution. En parallèle, l'ovalisation est ainsi limitée.

Un corps composite permet d'alléger le couvercle, et donc de réduire la consommation d'un aéronef doté d'une turbomachine selon l'invention. Par ailleurs, la réalisation d'un couvercle composite par injection permet de réaliser une économie puisque le moule peut être amorti sur une série de plusieurs centaines ou milliers de pièces. L'emploi d'une matrice thermoplastique permet de résister aux attaques chimiques inhérentes au brouillard d'huile dont la température peut être supérieure à 100°C, éventuellement supérieure à 200°C.

### Brève description des dessins

La figure 1 représente une turbomachine axiale selon l'invention.
La figure 2 est un schéma d'un compresseur de turbomachine selon l'invention.
La figure 3 illustre une vue de face du couvercle selon l'invention observé depuis l'amont.
La figure 4 esquisse une coupe du couvercle selon l'invention suivant l'axe 4-4 tracé sur la figure 3.
La figure 5 ébauche une coupe du couvercle selon l'invention suivant l'axe 5-5 tracé sur la figure 3.
La figure 6 illustre une vue de dos du couvercle selon l'invention observé depuis l'aval.
La figure 7 représente une coupe du couvercle selon l'invention suivant l'axe 7-7 tracé sur la figure 6.

### Description des modes de réalisation

Dans la description qui va suivre, les termes intérieur ou interne et extérieur ou externe renvoient à un positionnement par rapport à l'axe de rotation d'une turbomachine axiale.

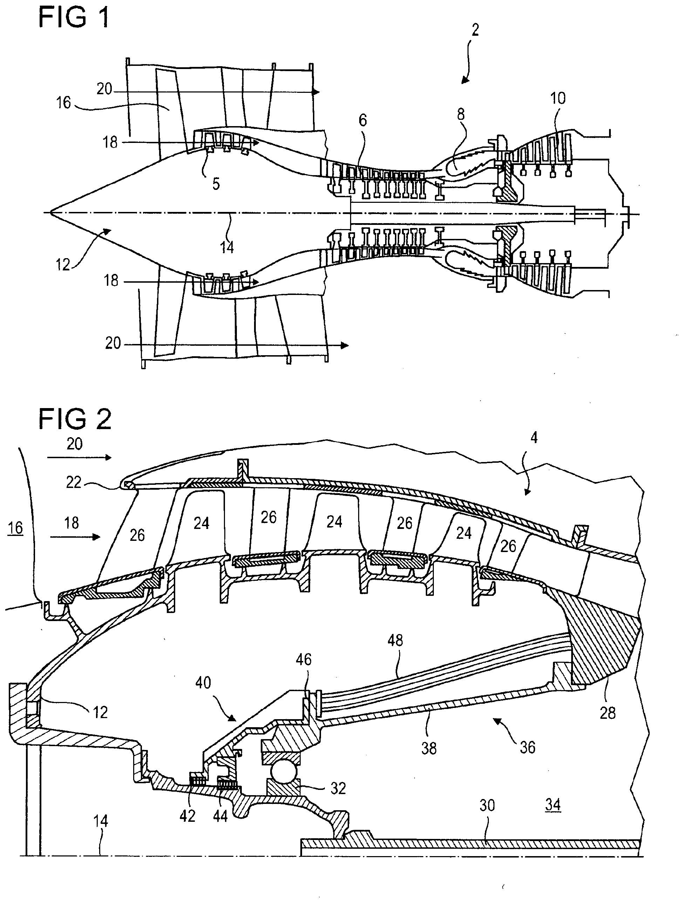

La figure 1 représente de manière simplifiée une turbomachine axiale. Il s'agit dans ce cas précis d'un turboréacteur double-flux. L'invention peut également s'appliquer à un turboréacteur triple corps développant une poussée supérieure à 360 kN, ou à une turbomachine développant une puissance mécanique supérieure à 550 MW, et dont le rendement est éventuellement supérieur à 60%.

Le turboréacteur 2 comprend un premier niveau de compression, dit compresseur basse-pression 5, un deuxième niveau de compression, dit compresseur haute-pression 6, une chambre de combustion 8 ; et un ou plusieurs niveaux de turbines 10, telles une turbine basse pression et une turbine haute pression.

En fonctionnement, la puissance mécanique des turbines 10 est transmise jusqu'au rotor 12 et met en mouvement les compresseurs 5 et 6. La transmission s'effectue au moyen d'arbres de transmission concentriques. Des moyens de démultiplication peuvent augmenter la vitesse de rotation transmise aux compresseurs. Chaque turbine peut être reliée à un des compresseurs via un arbre de transmission.

Les compresseurs comportent plusieurs rangées d'aubes de rotor associées à des rangées d'aubes de stator. La rotation du rotor autour de son axe de rotation 14 permet ainsi de générer un débit d'air et de le comprimer progressivement jusqu'à l'entrée de la chambre de combustion 10.

Un ventilateur d'entrée communément désignée soufflante 16 est couplé au rotor 12 et génère un flux d'air qui se divise en un flux primaire 18 traversant les différentes zones sus mentionnés de la turbomachine, et un flux secondaire 20 traversant un conduit annulaire (partiellement représenté) le long de la machine pour ensuite rejoindre le flux primaire en sortie de turbine. Les flux primaire 18 et secondaire 20 sont des flux annulaires, ils sont canalisés par le carter de la turbomachine.

La figure 2 est une vue en coupe d'un compresseur de la turbomachine axiale 2 telle que celle de la figure 1. Le compresseur peut être un compresseur basse pression 5.

On peut y observer une partie du fan 16 et le bec de séparation 22 du flux primaire 18 et du flux secondaire 20. Le compresseur comprend plusieurs étages de compression, chaque étage comprenant une rangée annulaire d'aubes rotoriques 24 suivie d'une rangée annulaire d'aubes statoriques 26 pour convertir la vitesse du flux issu d'une rangée d'aubes rotorique en pression.

La turbomachine comprend un carter intérmédiaire 28 de soufflante qui peut porter la soufflante, les compresseurs et les turbines. La turbomachine peut comprendre plusieurs arbres de transmission 30, dont un premier arbre de transmission reliant le compresseur haute pression à la turbine haute pression, et un deuxième arbre de transmission reliant le compresseur basse presion à la turbine basse pression. Les arbres de transmission 30 peuvent être directement articulés l'un par rapport à l'autre à l'aide d'au moins un palier tel un roulement. Chaque arbre de transmission 30 peut être directement rélié au carter intermédiaire 28 via au moins un, préférentiellement deux paliers 32, tels des roulements.

La turbomachine comporte une enceintre de lubrification 34 autour d'au moins un palier 32 dans laquelle reigne un brouillard d'huile. Pour délimiter l'enceinte de lubrification 34, la turbomachine peut comprendre un carter d'enceinte 36 qui supporte un palier 32. Le palier 32 peut être un palier auxiliaire permettant de limiter les vibrations de l'arbre de transmission 30, la turbomachine comprenant en outre des paliers principaux configurés pour supporter la majorité des efforts du rotor. Le carter d'enceinte 36 peut être configuré pour se déformer radialement en cas de vibration d'un arbre de transmission.

Le carter d'enceinte 36 présente une cloison annulaire 38 fixée au carter intermédiaire 28 de manière étanche. Le carter d'enceinte 36 peut supporter un des paliers 32 articulant un des arbres de transmission 30. Il présente une forme généralement cylindrique. Il peut être réalisé en métal tel de l'acier ou un alliage de titane.

La turbomachine comprend un couvercle annulaire 40 d'enceinte de lubrification ou flasque d'étanchéité. Le couvercle annulaire 40 présente une forme annulaire de sorte à pouvoir fermer de manière étanche l'ouverture annulaire formée entre le carter d'enceinte 36 et l'arbre de transmission 30, ladite ouverture étant ouverte axialement vers l'amont. Le couvercle 40 peut s'étendre radialement au droit du palier 32. Le couvercle 40 comprend et supporte au moins un joint annulaire, préférentiellement plusieurs joints annulaires 42 et 44 qui coopèrent de manière étanche avec l'abre de transmission 30, lesdits joints (42, 44) peuvant être disposés sur une même moitié axiale du couvercle 40. Par joint, on entend aussi bien un élément assurant seul une étanchéité contre une surface qu'une portion de joint ; étant donné qu'un joint peut être formé de deux portions. Un tel joint en deux portions peut être un joint labyrinthe, ou un joint avec une couche annulaire de matériau abradable qui coopère avec un jeu de nervures annulaires radiales.

Le couvercle 40 peut entourer le palier 32 et une portion du carter d'enceinte 36. Le couvercle 40 peut être fixé au carter d'enceinte 36 via une bride annulaire de fixation 46 s'étendant radialement.

Afin d'éviter que le brouillard d'huile ne s'échappe via les joints annulaires (42, 44), l'enceinte de lubrification 34 peut être maintenue en dépression. La turbomachine peut comprendre des dispositifs maintenant une surpression autour de l'enceinte de lubrification 34 et/ou des dispositifs créant une aspiration pour abaisser la pression à l'intérieur de l'enceinte de lubrification 34. Entre autres, la turbomachine peut comprendre des tuyaux 48 pour entretenir l'aspiration et/ou pour collecter de l'huile du brouillard d'huile. Au moins un tuyau 48 peut coopérer avec le couvercle 40 de sorte à entretenir une aspiration. Les tuyaux peuvent créer une surpression entre les joints annulaires. Le tuyau 48 est avantageusement disposé à l'extérieur du carter d'enceinte 36.

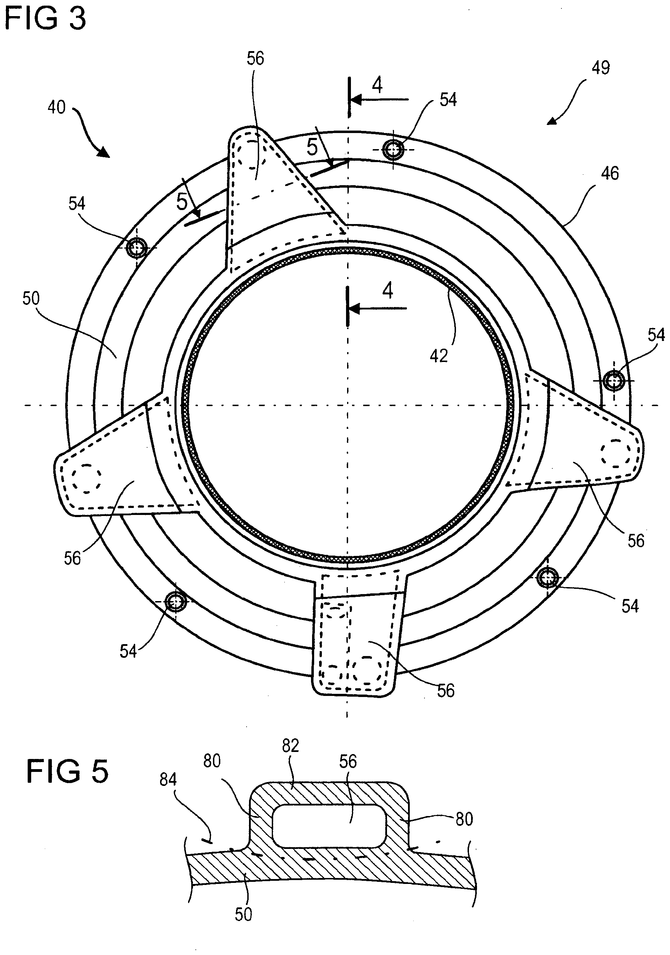

La figure 3 est une vue suivant l'axe du couvercle annulaire 40 selon l'invention, le couvercle étant vu d'amont vers l'aval.

Le couvercle comprend un corps 49 venu de matière. Il peut être réalisé en métal. Il est avantageusement réalisé en un matériau composite avec une matrice thermoplastique et des fibres. Les fibres peuvent être des fibres courtes de carbone ou de verre, dont la longueur est inférieure à 10 mm, préférentiellement inférieure à 3 mm. La matrice peut comprendre du polyamide, du polyétherimide (PEI), ou du polyétheréthercétone (PEEK). Il peut être réalisé par injection d'une résine chargée dans un moule d'injection. Certaines formes de conduits peuvent être réalisées à l'aide de noyaux, éventuellement provisoires.

Le corps 49 comprend une paroi annulaire principale 50, généralement évasée ou tronconique. Par évasé on entend que la paroi présente une augmentation de diamètre d'un côté, et une réduction de diamètre de l'autre côté. La paroi annulaire principale 50 permet de délimiter de manière étanche l'enceinte de lubrification entre l'extrémité amont du carter d'enceinte et les joints 42 coopérant avec l'arbre de transmission. La paroi 50 peut entourer le carter d'enceinte. La paroi 50 est essentiellement courte en regard de son diamètre, son rayon extérieur maximal est supérieur, préférentiellement au moins trois fois supérieur à sa longueur axiale. Alternativement, le corps peut être un polyèdre massif dans lequel est allésé un tronc de cône dont la surface intérieure forme la paroi annulaire.

La bride de fixation 46 comprend des orifices de fixation 54 destinés à coopérer avec des vis, des goujons où des lock-bolts afin d'être fixée au carter d'enceinte. Elle comprend une surface de montage qui peut être plane et disposée en aval, et qui est destinée à être plaquée contre le carter d'enceinte de sorte à assurer une étanchéité.

Le corps 49 du couvercle comprend au moins un conduit 56, tel un conduit 56 d'aspiration d'huile, préférentiellement plusieurs conduits 56 d'aspiration d'huile répartis autour du couvercle 40. Dans le cas présent, le couvercle 40 comprend quatre conduits 56. Chaque conduit 56 s'étend de manière radiale. Chaque conduit 56 s'étend le long de la paroi annulaire 50. Les conduits 56 forment des discontinuités sur la paroi 50, ils peuvent dépasser radialement de la bride de fixation 46. Ils présentent chacun une même longueur axiale et/ou radiale.

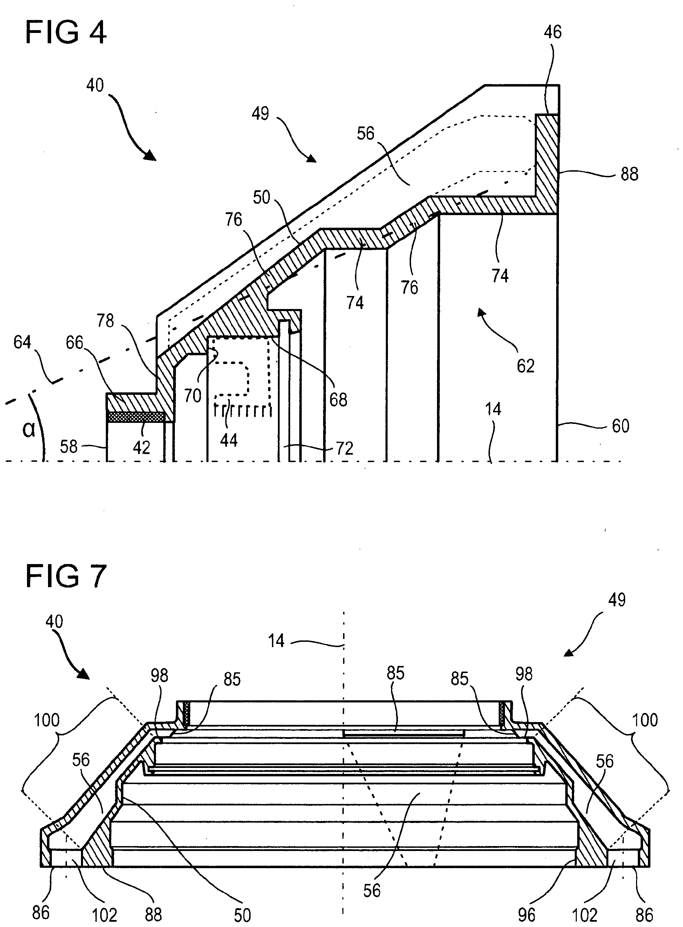

La figure 4 esquisse une coupe du couvercle 40 selon l'axe 4-4 tracé sur la figure 3.

Le couvercle 40 peut présenter une forme généralement annulaire avec deux ouvertures ou orifices 58 et 60 opposés axialement, qui sont destinés à être traversées par l'arbre de transmission. Le couvercle présente un orifice amont 58 sur lequel est disposé un joint annulaire, tel un joint amont 42, et un orifice aval 60 destiné à coopérer avec le carter d'enceinte et dont le diamètre est supérieur au diamètre de l'orifice amont 58.

La paroi annulaire 50 comprend un profil de révolution 62 généralement incliné par rapport à l'axe 14. La droite moyenne 64 du profil de révolution 62 de la paroi annulaire 50 est inclinée par rapport à l'axe 14 d'un angle acompris entre 10° et 80°, préférentiellement compris entre 25° et 45°. La droite moyenne 64 peut être une droite des moindres carrés calculée à partir du contour du profil de révolution 62.

Le couvercle 40 peut comprendre une portée tubulaire amont 66 sur laquelle est rapporté le joint amont 42, telle une couche annulaire de matériau abradable. Eventuellement, la portée tubulaire 66 peut être conformée avec le corps. L'épaisseur du voile de la portée tubulaire 66 peut être inférieure à l'épaisseur de la paroi annulaire 50.

Le corps peut comprendre une surface cylindrique intérieure de montage 68 d'un joint annulaire. La surface de montage 68 peut être délimitée axialement par un épaulement 70 et par une gorge annulaire 72 formés dans le corps 49. Le couvercle peut comprendre le joint annulaire interne 44, par exemple avec un jeu de nervures annulaires radiales destinées à coopérer avec un rotor, le joint interne 44 étant monté à l' intérieur de la surface de montage 68.

Chaque conduit 56 s'étend axialement sur la majorité du couvercle 40, préférentiellement essentiellement sur la totalité du corps 49 du couvercle. Chaque conduit 56 s'étend radialement sur la majorité, préférentiellement essentiellement sur la totalité du profil de révolution 62 de la paroi annulaire 50, plus préférentiellement sur plus que le profil de révolution 62 de la paroi annulaire 50. Chaque conduit 56 s'étend le long du profil de révolution 62 de la paroi, éventuellement le long de la surface extérieure de la paroi.

La paroi 50 peut présenter des portions tubulaires 74 et des portions tronconiques 76, éventuellement disposées par alternance de sorte à augmenter l'élasticité axiale du couvercle. La paroi peut également comprendre au moins une portion s'étendant essentiellement radialement 78, par exemple disposée en amont. Ces portions forment des marches. L'ensemble des portions forme une paroi généralement évasée, avec une réduction de diamètre vers l'amont.

Eventuellement, le corps présente également un profil de révolution matérialisant la paroi, la bride de fixation 46, la surface intérieure de montage de joint 68.

La figure 5 illustre une coupe du couvercle 40 selon l'axe 5-5 tracé sur la figure 3.

Le conduit 56 peut présenter un profil rectangulaire. Il présente deux cloisons latérales 80 opposées qui s'étendent radialement depuis la paroi annulaire 50, et une cloison externe 82 ou paroi supérieure 82 reliant les extrémités radialement externes des cloisons latérales 80. La combinaison des cloisons et de la paroi annulaire 50 dessine un contour fermé avec une continuité de matière, formant un renfort avec un passage étanche. Le profil du conduit peut également être triangulaire, ou rond.

La paroi annulaire 50 et la matière du corps qui délimité le conduit 56 présentent une interface 84 avec une continuité de matière qui s'étend le long du conduit 56. Selon une autre interprétation de l'invention, la paroi et les cloisons latérales présentent deux interfaces avec continuités de matière s'étendant le long du conduit. Chaque continuité de matière peut s'étendre sur la majorité longitudinale du conduit, préférentiellement le long d'essentiellement l'intégralité du conduit. La direction longitudinale du conduit correspond à un axe tracé entre ses extrémités.

Le corps présente des variations d'épaisseurs selon sa circonférence, qui peuvent éventuellement être observées sur sa surface extérieure. Il présente des épaississements au niveau des conduits 56, et des zones de moindre épaisseur sur la paroi 50 de part et d'autre de chaque conduit 56.

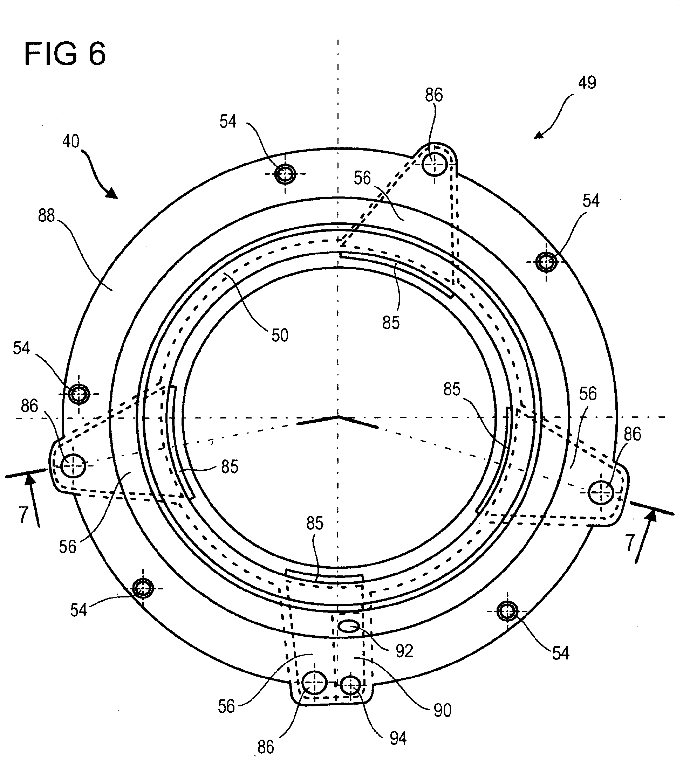

La figure 6 illustre une vue axiale du couvercle 40, le couvercle étant observé de l'aval vers l'amont.

Chaque conduit présente une entrée 85 permettant d'aspirer de l'huile, et une sortie 86 par laquelle est refoulée l'huile. Chaque conduit 56 est essentiellement étanche. Les sorties 86 sont disposées en aval, et radialement vers l'extérieur, elles sont destinées à être chacune reliée à un tuyau d'aspiration. Les sorties 86 sont formées dans la surface de montage 88 de la bride de fixation 46. La section de passage de l'entrée 85 peut être comprise entre 0,1 cm2 et 50 cm2, l'entrée peut former la section minimale de passage du conduit correspondant.

Les entrées 85 peuvent être disposées en amont et radialement vers l'intérieur, elles peuvent communiquer avec l'enceinte de lubrification, éventuellement au travers d'un joint. Elles peuvent avoir des formes de fentes radiales. Elles sont disposées sur une même zone annulaire, et peuvent y être généralement réparties sur la circonférence. Leur répartition peut être asymétrique. Leurs positions sont globalement écartées de 90°, de sorte à permettre une aspiration dans différentes conditions de vol d'un aéronef. Les entrées 85 s'étendent selon la circonférence du couvercle 40. Au cumul, elles couvrent au moins 10%, préférentiellement au moins 25%, plus préférentiellement au moins 50% de la circonférence de la zone annulaire sur laquelle elles sont disposées.

En complément, le couvercle 40 peut comprendre un canal d'aspiration 90 d'huile. Le canal 90 peut être parallèle à un des conduits 56, préférentiellement celui disposé en bas. Le canal 90 comprend une entrée 92 et une sortie 94 disposée sur la surface de montage 88 de manière similaire aux sorties des conduits 56. Il est cependant plus court qu'eux puisque son entrée 92 peut être disposée en aval du joint annulaire interne (non représenté), de sorte à aspirer directement un dépôt d'huile liquide formé en partie basse de l'enceinte de lubrification.

La figure 7 ébauche une coupe du couvercle 40 selon l'axe 7-7 tracé sur la figure 6.

Le couvercle 40 comporte une surface de positionnement cylindrique 96 permettant d'assurer une concentricité avec le carter d'enceinte. Le carter d'enceinte peut comprendre une surface de positionnement correspodante, les surfaces de positionnement étant configurées de sorte à assurer une concentricité inférieure à 0,5 mm, préférentiellement inférieure à 0,05 mm. L'orientation peut être donnée à l'aide d'un élément tel un axe ou un moyen de fixation.

Chaque conduit 56 présente une variation de section de passage. Chaque conduit 56 peut comprendre plusieurs portions avec des sections de passage différentes. D'amont vers l'aval, chaque conduit peut comprendre une portion radiale 98, une portion intermédiaire 100, une portion axiale 102. La portion radiale 98 peut former l'entrée 85. La portion axiale 102 peut former la sortie 86 et présenter une forme cylindrique favorisant une insertion axiale sur les tuyaux d'aspiration lorsque le couvercle est chaussé axialement sur le carter d'enceinte.

La portion intermédiaire 100 peut présenter une variation de section de passage. La portion intermédiaire 100 peut épouser la paroi annulaire 50, préférentiellement épouser la surface extérieure de la paroi annulaire. Elle peut épouser les formes de marches de la paroi 50. Eventuellement, la portion intermédiaire 100 peut être formée, éventuellement partiellement, dans l'épaisseur de la paroi annulaire 50. Elle peut traverser la paroi. De la sorte, les rayons des portions axiales de la paroi peuvent être réduits de sorte à épouser les éléments disposés à l'intérieur. Au moins un, ou chaque conduit 56 peut présenter une hauteur variable. La hauteur peut augmenter dans le sens où la paroi 50 présente une augmentation de diamètre extérieur.

Au moins un ou chaque conduit 56 présente une direction principale entre son entrée 85 et sa sortie 86. La direction principale est inclinée par rapport à l'axe 14 d'un angle compris entre 20° et 60°, préférentiellement compris entre 30° et 50°.

De manière alternative, à la place d'être évasée, la paroi peut être généralement plate, ce qui permet également de fermer l'ouverture annulaire axiale. Dans ce mode de réalisation les conduits s'étendent essentiellement radialement.

Il est évident pour l'homme du métier que le couvercle peut être employé à différent endroits de la turbomachine. Le couvercle peut également être retourné de sorte à inverser l'amont et l'aval. Dans cette configuration, les dimensions amont et aval du couvercle peuvent être inversées.

## Revendications

1. Couvercle annulaire (40) d'enceinte de lubrification (34) de palier (32) tournant de turbomachine (2), le couvercle (40) comprenant :
- une paroi (50) généralement circulaire et évasée avec, à une extrémité, un orifice (58) destiné à recevoir un arbre de transmission (30) et à l'autre extrémité une surface de montage (88) du couvercle ;
- un ou plusieurs conduit(s) (56) s'étendant le long de la paroi (50) jusqu'à la surface de montage (88),
**caractérisé en ce que**
le ou les conduit(s) (56) est un / sont des conduit(s) d'aspiration d'huile en communication avec l'intérieur de la paroi (50).

2. Couvercle (40) selon la revendication 1, **caractérisé en ce que** le ou les conduits (56) sont intégralement formés avec la paroi (50), préférentiellement le ou les conduits (56) sont venus de matière avec la paroi.

3. Couvercle (40) selon l'une des revendications 1 et 2, **caractérisé en ce que** le ou les conduits (56) sont des conduits d'huile présentant une section de passage minimale comprise entre 0,3 cm2 et 15 cm2, préférentiellement comprise entre 0,6 cm2 et 4 cm2.

4. Couvercle (40) selon l'une des revendications 1 à 3, **caractérisé en ce que** la paroi (50) présente un épaississement le long du ou des conduits (56), préférentiellement chaque conduit est majoritairement disposé à l'extérieur de la paroi (50).

5. Couvercle (40) selon l'une des revendications 1 à 4, **caractérisé en ce que** chaque conduit (56) s'étend généralement parallèlement à la paroi (50), préférentiellement chaque conduit (56) s'étend sur la majorité axiale du couvercle (40), plus préférentiellement la paroi comprend un profil général de révolution (62), chaque conduit (56) s'étendant essentiellement sur la totalité radiale du profil de révolution (62) de la paroi (50).

6. Couvercle (40) selon l'une des revendications 1 à 5, **caractérisé en ce que** la largeur de chaque conduit (56) augmente et/ou la hauteur de chaque conduit diminue, dans le sens de la diminution de diamètre de la paroi évasée.

7. Couvercle (40) selon l'une des revendications 1 à 6, **caractérisé en ce que** chaque conduit (56) comprend une entrée (85) orientée radialement et disposée du côté de moindre diamètre de la paroi évasée, et/ou une sortie (86) cylindrique orientée axialement et disposée du côté du diamètre maximal de la paroi évasée.

8. Couvercle (40) selon l'une des revendications 1 à 7, **caractérisé en ce que** la paroi (50) et le ou les conduits (56) sont réalisés en un matériau composite, préférentiellement en un composite avec des fibres de carbone et une matrice thermoplastique telle que du polyétheréthercétone, du polyétherimide, ou du polyamide.

9. Couvercle (40) selon l'une des revendications 1 à 8, **caractérisé en ce que** la paroi (50) comprend une alternance de portions tronconiques (76) et de portions tubulaires (74), et éventuellement une portion s'étendant radialement (78), lesdites portions étant agencées de manière à former un ensemble généralement évasé.

10. Couvercle (40) selon l'une des revendications 1 à 9, **caractérisé en ce qu'**il comprend une bride annulaire de fixation (46) s'étendant radialement et qui comprend la surface de montage (88), chaque conduit (56) traversant la bride annulaire de fixation (46).

11. Couvercle (40) selon l'une des revendications 1 à 10, **caractérisé en ce qu'**il comprend une portée tubulaire (66) à son extrémité axiale du côté de moindre diamètre de la paroi évasée et/ou il comprend une surface cylindrique intérieure de réception (68) d'un joint annulaire, la surface de réception (68) étant délimitée axialement par un épaulement (70) et par une gorge annulaire (72), préférentiellement le couvercle comprend un joint annulaire amont (42) telle une couche annulaire de matériau abradable appliquée à l'intérieur de la portée tubulaire (66), et/ou un joint annulaire interne (44) tel un jeu de nervures annulaires radiales, monté à l'intérieur de la surface de réception (68).

12. Couvercle (40) selon l'une des revendications 1 à 11, **caractérisé en ce qu'**il comprend deux joints annulaires (42 ; 44) destinés à coopérer avec au moins un rotor (12) et disposés sur une même moitié axiale du couvercle (40), chaque conduit (56) débouchant entre axialement les deux joints et étant en communication avec l'enceinte de lubrification (34) au travers d'un des joints (44).

13. Turbomachine (2) comprenant un couvercle annulaire (40) d'enceinte de lubrification (34) de palier tournant (32), **caractérisée en ce que** le couvercle (40) d'enceinte est conforme à l'une des revendications 1 à 12, préférentiellement la turbomachine (2) comprend en outre au moins un compresseur (5 ; 6), au moins une turbine (10), au moins un arbre de transmission (30) reliant le compresseur (5 ; 6) à la turbine (10), un carter intermédiaire de soufflante (28), un palier tournant (32) articulant l'arbre de transmission (30) par rapport au carter intermédiaire (28), un carter d'enceinte (36) de lubrification monté de manière étanche sur le carter intermédiaire de soufflante (28) et formant autour de l'arbre de transmission (30) une ouverture annulaire orientée axialement, le couvercle annulaire (40) d'enceinte étant monté sur le carter d'enceinte (36) de sorte à fermer l'ouverture annulaire axiale.

14. Turbomachine (2) selon la revendication 13, **caractérisée en ce que** le palier (32) est disposé à l'intérieur du couvercle annulaire (40), préférentiellement le palier (32) est un palier auxiliaire (32) d'un jeu de paliers auxiliaires, la turbomachine (2) comprenant en outre un jeu de paliers principaux configurés pour supporter la majorité des efforts d'au moins un des arbres de transmission (30) de la turbomachine (2).

15. Turbomachine (2) selon l'une des revendications 13 à 14, **caractérisée en ce que** le couvercle (40) comprend plusieurs conduits (56) répartis sur sa circonférence, éventuellement les conduits (56) comprennent une répartition asymétrique, préférentiellement les conduits (56) sont configurés pour être majoritairement disposés dans la moitié inférieure du couvercle (40) dans l'état monté sur la turbomachine.

## Patentansprüche

1. Ringförmiger Deckel (40) eines Schmierraums (34) eines rotierenden Lagers (32) einer Turbomaschine (2), welcher Deckel Folgendes beinhaltet:
- eine allgemein rundförmige und aufgeweitete Wandung (50) mit einer Öffnung (58) am einen Ende, die für die Aufnahme einer Transmissionswelle (30) bestimmt ist und einer Oberfläche für die Montage (88) des Deckels am anderen Ende;
- eine oder mehrere Leitung(en) (56), die sich entlang der Wandung (50) bis zur Montageoberfläche (88) erstreckt/erstrecken,
**dadurch gekennzeichnet, dass**
die Leitung eine Ölansaugleitung ist oder die Leitungen (56) Ölansaugleitungen sind, die mit der Innenseite der Wandung (50) kommuniziert/kommunizieren.

2. Deckel (40) nach Anspruch 1, **dadurch gekennzeichnet, dass** die Leitung oder die Leitungen (56) vollständig mit der Wandung (50) geformt sind, wobei vorzugsweise die Leitung oder die Leitungen (56) aus dem gleichen Material bestehen, wie die Wandung.

3. Deckel (40) nach einem der Ansprüche 1 und 2, **dadurch gekennzeichnet, dass** die Leitung oder die Leitungen (56) Ölleitungen mit einem Mindestdurchgangsquerschnitt zwischen 0,3 cm2 und 15 cm2, vorzugsweise zwischen 0,6 cm2 und 4 cm2 sind.

4. Deckel (40) nach einem der Ansprüche 1 bis 3, **dadurch gekennzeichnet, dass** die Wandung (50) eine Verdickung entlang der Leitung oder der Leitungen (56) aufweist, wobei jede Leitung vorzugsweise überwiegend an der Außenseite der Wandung (56) angeordnet ist.

5. Deckel (40) nach einem der Ansprüche 1 bis 4, **dadurch gekennzeichnet, dass** sich jede Leitung (56) im Allgemeinen parallel zur Wandung (50) erstreckt, wobei sich jede Leitung (56) vorzugsweise über den überwiegenden axialen Teil des Deckels (40) erstreckt und die Wandung noch bevorzugter ein allgemeines Rotationsprofil (62) beinhaltet und sich jede Leitung (56) im Wesentlichen über den gesamten radialen Teil des Rotationsprofils (62) der Wandung (50) erstreckt.

6. Deckel (40) nach einem der Ansprüche 1 bis 5, **dadurch gekennzeichnet, dass** die Breite jeder Leitung (56) in Richtung der Verringerung des Durchmessers der ausgeweiteten Wandung zunimmt und/oder ihre Höhe abnimmt.

7. Deckel (40) nach einem der Ansprüche 1 bis 6, **dadurch gekennzeichnet, dass** jede Leitung (56) einen Eingang (85) beinhaltet, der radial ausgerichtet ist und an der Seite mit dem geringsten Durchmesser der ausgeweiteten Wandung angeordnet ist und/oder einen zylinderförmigen Ausgang (86), der axial ausgerichtet und an der Seite mit dem maximalen Durchmesser der ausgeweiteten Wandung angeordnet ist.

8. Deckel (40) nach einem der Ansprüche 1 bis 7, **dadurch gekennzeichnet, dass** die Wandung (50) und die Leitung oder die Leitungen (56) aus einem Verbundmaterial bestehen, vorzugsweise aus einem Verbundmaterial mit Kohlenstofffasern und einer thermoplastischen Matrix, wie Polyetherketon, Polyetherimid oder Polyamid.

9. Deckel (40) nach einem der Ansprüche 1 bis 8, **dadurch gekennzeichnet, dass** die Wandung (50) einen Wechsel von kegelstumpfförmigen Abschnitten (76) und röhrenförmigen Abschnitten (74) und eventuell einen Abschnitt beinhaltet, der sich radial (78) erstreckt, wobei die genannten Abschnitte so angeordnet sind, dass sie ein allgemein ausgeweitetes Gebilde bilden.

10. Deckel (40) nach einem der Ansprüche 1 bis 9, **dadurch gekennzeichnet, dass** er einen ringförmigen Befestigungsflansch (46) beinhaltet, der sich radial erstreckt und eine Montageoberfläche (88) beinhaltet, wobei jede Leitung (56) den ringförmigen Befestigungsflansch (46) durchquert.

11. Deckel (40) nach einem der Ansprüche 1 bis 10, **dadurch gekennzeichnet, dass** er einen röhrenförmigen Vorsprung (66) an seinem axialen Ende an der Seite mit dem geringsten Durchmesser der ausgeweiteten Wandung beinhaltet und/oder eine zylindrische innere Oberfläche für die Aufnahme (68) einer ringförmigen Dichtung beinhaltet, wobei die Aufnahmeoberfläche (68) axial anhand einer Schulter (70) und einer ringförmigen Nut (72) begrenzt wird, wobei der Deckel vorzugsweise eine ringförmige obere Dichtung (42) beinhaltet, wie z.B. eine ringförmige Schicht eines Abriebmaterials, das auf der Innenseite des röhrenförmigen Vorsprungs (66) aufgetragen wird und/oder eine ringförmige innere Dichtung (44), wie z.B. einen Satz von radialen ringförmigen Rippen, die auf der Innenseite der Aufnahmeoberfläche (68) angebracht sind.

12. Deckel (40) nach einem der Ansprüche 1 bis 11, **dadurch gekennzeichnet, dass** er zwei ringförmige Dichtungen (42; 44) beinhaltet, die dazu bestimmt sind, um mindestens mit einem Rotor (12) zusammenzuwirken und auf der gleichen axialen Hälfte des Deckels (40) angeordnet sind, wobei jede Leitung (56) axial zwischen den beiden Dichtungen mündet und mit dem Schmierraum (34) anhand einer der Dichtungen (44) kommuniziert.

13. Turbomaschine (2) mit einem ringförmigen Deckel (40) eines Schmierraums (34) eines rotierenden Lagers (32), **dadurch gekennzeichnet, dass** der Deckel (40) des Raums einem der Ansprüche 1 bis 12 entspricht, wobei die Turbomaschine (2) vorzugsweise außerdem mindestens einen Kompressor (5; 6), mindestens eine Turbine (10), mindestens eine Transmissionswelle (30), die den Kompressor (5; 6) mit der Turbine (10) verbindet, ein Gebläsezwischengehäuse (28), ein rotierendes Lager (28), das die Transmissionswelle (30) im Verhältnis zum Zwischengehäuse (28) anlenkt, ein Schmierraumgehäuse (36), das dicht auf dem Gebläsezwischengehäuse (28) montiert ist und um die Transmissionswelle (30) herum eine axial ausgerichtete ringförmige Öffnung bildet, beinhaltet, wobei der ringförmige Deckel (40) des Raums in der Weise auf dem Raumgehäuse (36) montiert ist, dass die axiale ringförmige Öffnung verschlossen wird.

14. Turbomaschine (2) nach Anspruch 13, **dadurch gekennzeichnet, dass** das Lager (32) innerhalb des ringförmigen Deckels (40) angeordnet ist und das Lager (32) vorzugsweise ein Hilfslager (32) eines Satzes von Hilfslagern ist, wobei die Turbomaschine (2) außerdem einen Satz von Hauptlagern beinhaltet, die so konfiguriert sind, dass sie den größten Teil der Kräfte mindestens einer der Transmissionswellen (30) der Turbomaschine (2) aufnehmen.

15. Turbomaschine (2) nach einem der Ansprüche 13 bis 14, **dadurch gekennzeichnet, dass** der Deckel (40) mehrere Leitungen (56) beinhaltet, die auf seinem Umkreis verteilt sind, wobei die Leitungen (56) eventuell eine asymmetrische Verteilung beinhalten und die Leitungen (56) vorzugsweise so konfiguriert sind, dass sie im montierten Zustand auf der Turbomaschine mehrheitlich in der unteren Hälfte des Deckels angeordnet sind.

## Claims

1. Annular cover (40) for a lubrication chamber (34) of a rotary bearing (32) of a turbomachine (2), the cover (40) having:
- an annular wall (50) that is generally circular and flared with an orifice (58) at one end intended to receive a transmission shaft (30) and a cover assembly surface (88) at the other end;
- one or more duct(s) (56) extending along as far as the assembly surface (88),
**characterized in that**
the duct or the ducts (56) is an / are oil sucking duct(s) communicating with the inside of the wall (50).

2. Cover (40) according to Claim 1, **characterized in that** the duct or ducts (56) are integrally formed with the wall (50), and preferably the duct or ducts (56) and the wall are formed from a single piece.

3. Cover (40) according to one of Claims 1 and 2, **characterized in that** the duct or ducts (56) are oil ducts with a minimum flow area of between 0.3 cm² and 15 cm², preferably between 0.6 cm² and 4 cm².

4. Cover (40) according to one of Claims 1 to 3, **characterized in that** the wall (50) thickens along the length of the duct or ducts (56), and most of each duct is preferably positioned outside the wall (50).

5. Cover (40) according to one of Claims 1 to 4, **characterized in that** each duct (56) extends generally parallel to the wall (50), and each duct (56) preferably extends along most of the axial dimension of the cover (40), and more preferably the wall has a general profile of revolution (62), each duct (56) extending essentially along the full radial distance of the profile of revolution (62) of the wall (50).

6. Cover (40) according to one of Claims 1 to 5, **characterized in that** the width of each duct (56) increases and/or the height of each duct decreases in the direction of the reduction of the diameter of the flared wall.

7. Cover (40) according to one of Claims 1 to 6, **characterized in that** each duct (56) has a radially oriented inlet (85) positioned on the side of lesser diameter of the flared wall, and/or an axially oriented cylindrical outlet (86) positioned on the side of largest diameter of the flared wall.

8. Cover (40) according to one of Claims 1 to 7, **characterized in that** the wall (50) and the duct or ducts (56) are made of a composite material, preferably a composite with carbon fibres and a thermoplastic matrix such as polyether ether ketone, polyetherimide or polyamide.

9. Cover (40) according to one of Claims 1 to 8, **characterized in that** the wall (50) is made up of alternating truncated cone-shaped portions (76) and tubular portions (74), and possibly a radially extending portion (78), said portions being arranged to form a generally flared whole.

10. Cover (40) according to one of Claims 1 to 9, **characterized in that** it has a radially extending annular attachment flange (46) that includes the assembly surface (88), each duct (56) passing through the annular attachment flange (46).

11. Cover (40) according to one of Claims 1 to 10, **characterized in that** it has a tubular bearing surface (66) at the axial end thereof at the side of lesser diameter of the flared wall and/or it includes an internal cylindrical surface (68) for receiving a ring seal, the receiving surface (68) being delimited axially by a shoulder (70) and by an annular groove (72), the cover preferably including a ring seal (42) on the upstream side, such as an annular layer of abradable material applied to the inside of the tubular bearing surface (66), and/or an internal ring seal (44) such as a set of annular radial ribs assembled inside the receiving surface (68).

12. Cover (40) according to one of Claims 1 to 11, **characterized in that** it has two ring seals (42, 44) that are intended to cooperate with at least one rotor (12) and that are arranged on the same axial half of the cover (40), each duct (56) opening out axially between the two seals and communicating with the lubrication chamber (34) through one of the seals (44).

13. Turbomachine (2) including an annular cover (40) for a lubrication chamber (34) of a rotary bearing (32) **characterized in that**: the chamber cover (40) is as claimed in one of Claims 1 to 12, and the turbomachine (2) preferably also includes at least one compressor (5, 6), at least one turbine (10), at least one transmission shaft (30) linking the compressor (5, 6) to the turbine (10), an intermediate fan casing (28), a rotary bearing (32) joining the transmission shaft (30) to the intermediate casing (28), a lubrication chamber casing (36) mounted sealingly on the intermediate fan casing (28) and forming an axially oriented annular opening about the transmission shaft (30), the annular chamber (40) cover being mounted on the chamber casing (36) such as to close the axial annular opening.

14. Turbomachine (2) according to Claim 13, **characterized in that** the bearing (32) is placed inside the annular cover (40), and the bearing (32) is preferably an auxiliary bearing (32) of a set of auxiliary bearings, the turbomachine (2) also having a set of main bearings arranged to withstand most of the stresses of at least one of the transmission shafts (30) of the turbomachine (2).

15. Turbomachine (2) according to one of Claims 13 to 14, **characterized in that** the cover (40) has several ducts (56) distributed about the circumference of same, the distribution of the ducts (56) potentially being asymmetric, and the ducts (56) preferably being arranged to be mainly positioned on the lower half of the cover (40) when the turbomachine is in the assembled state.
